# EUROPEAN PATENT SPECIFICATION

(11) **EP 4 023 512 B1**
(45) Date of publication and mention of the grant of the patent: **30.08.2023**
(21) Application number: 21150134.1
(22) Date of filing: 05.01.2021
(51) Int. Cl.: B60T 17/08

(54) **STAMPED SPRING SEAT FOR USE IN SPRING BRAKE ACTUATOR, AND SPRING BRAKE ACTUATOR FOR USE IN COMMERCIAL VEHICLES**
GESTANZTE FEDERAUFNAHME ZUR VERWENDUNG IN EINEM FEDERSPEICHERBREMSZYLINDER UND FEDERSPEICHERBREMSZYLINDER ZUR VERWENDUNG IN NUTZFAHRZEUGEN
SIÈGE À RESSORT ESTAMPÉ DESTINÉ À ÊTRE UTILISÉ DANS UN ACTIONNEUR DE FREIN À RESSORT ET ACTIONNEUR DE FREIN À RESSORT DESTINÉ À ÊTRE UTILISÉ DANS DES VÉHICULES UTILITAIRES

(43) Date of publication of application: 06.07.2022
(73) Proprietor: ZF CV Systems Europe BV, 1170 Brussels (BE)
(72) Inventor: GAWLIK, Rafal, 51-315 Wrolaw (PL)
(74) Representative: Rabe, Dirk-Heinrich

(56) References cited:
- EP-A1- 2 944 529
- EP-B1- 2 944 529
- FR-A1- 2 683 286
- US-B2- 8 453 556

## Description

The present invention relates to spring seat for use in spring brake actuator, preferably parking or emergency spring brake actuator of a commercial vehicle, said spring seat having a longitudinal axis and being adapted to be placed inside a housing of the actuator adjacent a housing base of the actuator, the spring seat comprising a first side, which in use faces the housing base, and a second side which in use faces inwardly away from the housing base, wherein on the second side the spring seat further comprising a coupling portion for contacting a compression spring of the spring brake actuator, said compression spring being adapted to exert, in use, a force onto a spring brake piston into the direction of its longitudinal axis.

The present invention relates to a spring brake actuator, preferably parking or emergency spring brake actuator of a commercial vehicle, comprising:
- a cylinder housing having a circumferential portion and a cylinder housing base;
- a spring brake piston for applying a braking force by means of pressurized gas, preferably acting upon a push rod through a diaphragm;
- a spring seat which is located inside the housing and mounted adjacent the cylinder housing base;
- a compression spring adapted to exert, in use, a force onto the spring brake piston into the direction of its longitudinal axis.

Spring brake actuators of the aforementioned kind are used in the commercial vehicle industry to provide a service brake, a parking and/or emergency brake capability. Spring brake actuators are regularly connected to a service brake actuator and often act upon the same brake components which transmit the brake force to the vehicle wheel. Utilizing these two brake types together requires to ensure that only one of the brakes is activated at a time.

In known spring brake actuator systems, the spring-loaded portion of the spring brake actuator is typically located inside a pressurized air chamber. The compression spring is held in a compressed state by the air pressure inside the pressure chamber. The spring brake piston inside the spring-loaded portion pushes either directly a piston rod (push-rod) or a diaphragm which acts on the rod upon release of air pressure inside the spring brake actuator's pressure chamber, which leads to an actuation of the brake. These mechanisms are typically used for parking brake or emergency brake functions. Due to the high spring forces exerted by the compression spring in the known spring brake actuators, it has been found necessary to reinforce the cylinder housing base structurally in order to prevent damage to the housing caused by the spring forces. In the prior art, for example in US 4,729,290 by Ewald et al., a spring seat has been integrated inside the spring-loaded portion which abuts against the cylinder housing base on its first side, and on its second side accommodates the compression spring. The known spring seats in the prior art have been formed as disc-shaped plates, typically made from aluminium.

US 8,453,556 B2 discloses a brake actuator with a spring seat, wherein the spring seat comprises a central embossment.

While spring brake actuators with the known spring seats have satisfactory function and safety characteristics, it has been found that the cylinder is typically not stiff enough in the center region to properly work during the mechanical release of the actuator. It has also been observed that the spring may be displaced from its normal position, in particular when the actuator is subject to vibrations. Such a situation can cause improper function of the actuator and can generate noise.

It has thus been an object of the invention to provide an improved spring seat and spring brake actuator having an increased reliability and strength and stiffness and increased stability. In particular, it has also been an object of the invention to avoid noise generation caused by improper function.

According to a first aspect, the invention suggests to attain the underlying object regarding a spring seat which is characterized in that the spring seat comprising a central embossment positioned on the second side and inwardly from the coupling portion and essentially conforming the shape of an embossment of the housing base.

In accordance with the invention, by providing a central embossment essentially conforming the shape of a corresponding embossment of a housing base, the stiffness of this section of the spring seat and the portion of the housing of the brake actuator is substantially increased. Further, the mechanical stability is enhanced, resulting in less noise as well as increased positioning of the spring. In particular, when the break actuator is released, the improved stiffness improves the conditions of the mechanical releasing of the spring break actuator and keeps the power spring in position.

In accordance with a preferred embodiment, it is proposed that the spring seat has an axial section extending essentially in the direction of the longitudinal axis. The central portion extending perpendicular to the longitudinal axis has the ability to conform a corresponding section of the housing base of the break actuator which improves the mechanical stability and stiffness and reduces noise generation further. The two sections of the housing base and inventive embossment conform each other. They may essentially extend in parallel to each other, either in direct contact or in a certain distance to each other.

Furthermore, it is preferred that the spring seat having a central portion extending essentially in the direction perpendicular to the longitudinal axis. The embossment is designed by the axial section together with the central portion extending perpendicular to the longitudinal axis. It should be noted that extending essentially in the direction of the longitudinal axis allows an angle between the longitudinal axis and the axial section in the range of 0° to 35°. Also, it should be noted that the central portion extending essentially in the direction perpendicular to the longitudinal axis allows an angle in the range of 120° to 60° between the longitudinal axis and the central portion.

In accordance with the invention, the spring seat comprises a plurality of guiding elements for guiding the spring, said guiding elements extending essentially into the longitudinal direction and having a length which is larger than the length of the central embossment measured in the longitudinal axis. By providing such guiding elements for guiding the spring, it can be assured that the spring is held in position during operation. The guiding elements have a sufficient length extending from the lowest section inwardly into the housing.

Preferably, the guiding elements are positioned parallel to the axial section, so that the spring is safely guided and can move during its activation.

It is also preferred that the guiding elements are spaced from each other and positioned along a circle with respect to the longitudinal axis. This safes material and allows for a stable guidance of the spring.

Further, it is preferred that the guiding elements essentially have a rectangular cross section. This feature is in particular preferred within a further preferred embodiment of the preferred invention according to which the guiding elements are produced by a stamping process and subsequent bending. This embodiment has advantages regarding the manufacturing as well as the mechanical properties of the spring seat. The guiding elements and the central embossment can preferably be manufactured by means of a deep-drawn process, and the guiding elements can be stamped in a further step, and then subsequently be bent. The spring seat is essentially formed as one integral part having the embossment in the central region, preferably conforming the shape of the housing base, and also provides the guiding elements which are simply produced by stamping or cutting and a subsequent bending into the right direction. The mechanical stability is high and the manufacturing costs can be kept relatively low.

It is further preferred that the guiding elements essentially extend into the direction of the longitudinal axis.

In accordance with an alternative preferred embodiment, it is proposed that the coupling portion is essentially having the shape of a circular ring extending perpendicular to the longitudinal axis and having an outer rim extending into the direction of the longitudinal axis for guiding the spring, that the central embossment is adapted to follow the shape of the housing base of the actuator, and that the axial and central portion of the central embossment is dimensioned such that the central portion, in use, is spaced from but essentially parallel to a central embossment of the housing base. Such spring seat can be manufactured efficiently and provides for a good stiffness and is resistant against noise generation and vibrations and can thus keep the spring in the desired positions.

Preferably, the spring seat is manufactured by means of a stamping process. It has been found that a stamped spring seat is reliably strong and yet lightweight in comparison with the known disc-shaped spring seats of the prior art.

In accordance with a further preferred embodiment the central embossment is deep-drawn and comprises an outer diameter adapted to fit to an inner diameter of the compression spring.

The invention in accordance with a second aspect relates to a spring brake actuator, preferably parking or emergency spring brake actuator of a commercial vehicle, comprising:
- a cylinder housing having a circumferential portion and a cylinder housing base;
- a spring brake piston for applying a braking force by means of pressurized gas, preferably acting upon a push rod through a diaphragm;
- a spring seat which is located inside the housing and mounted adjacent the cylinder housing base;
- a compression spring adapted to exert, in use, a force onto the spring brake piston into the direction of its longitudinal axis;
characterized in that the spring seat is the spring seat according to at least one of the preceding claims.

The actuator having the spring seat according to the invention essentially provides the similar advantages described above for the spring seat. In particular, manufacturing is efficient, and the stability of the embossment is increased significantly.

In accordance with a preferred embodiment of the actuator, the housing base is having a deep drawn embossment extending inwardly into the cylinder housing, that a separate central boss element having an internal thread for cooperating with a threat of a brake release rod is attached to the deep drawn embossment of the housing base,
and that the axial and central portion of the central embossment is dimensioned such that the central portion is spaced from but essentially parallel to the central embossment of the housing base.

Further, it is preferred in terms of manufacturing and durability that the spring seat consists of a steel alloy and wherein the spring seat is at least partially, preferably fully coated with a coating selected from the list consisting of:
- Zn coating;
- composite coating;
- metallic coating;
or combinations thereof.

Preferably, the spring seat is held in position within the cylinder housing by essentially the spring force of the compression spring,
and/or wherein the cylinder housing base is at least partially, preferably fully, coated with a coating selected from the list consisting of:
- Zn coating;
- composite coating;
- metallic coating;
- powder coating
or combinations thereof.

For a more complete understanding of the invention, the invention will now be described in more detail with reference to the accompanying drawings. The detailed description will illustrate and describe or is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and is claimed hereinafter. Further, the features described in the description, the drawings and the claims disclosing the invention may be essential for the invention considered alone or in combination. In particular, any reference signs in the claims shall not be construed as limiting the scope of the invention. The word "comprising" does not exclude other elements or steps. The wording "a" or "an" does not exclude a plurality.

Further preferred embodiments and features in accordance with the invention are described in the dependent claims as well as the following description.

For a more complete understanding of the invention, the invention is described in detail with reference to the accompanying drawing. The detailed description illustrates and describes what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The wording "a" or "an" does not exclude a plurality.

This invention will now be described with reference to the accompanying drawings which illustrate, by way of example and not by way of limitation, one of several possible embodiments of the clutch servo proposed herein, and wherein:
- Fig. 1:: shows a schematic perspective partial sectional view of a spring seat in a preferred embodiment,
- Fig. 2:: shows a schematic perspective partial sectional view of a spring brake actuator in a preferred embodiment, and
- Fig. 3:: shows a schematic sectional view of a spring brake actuator in the preferred embodiment according to Fig. 2.

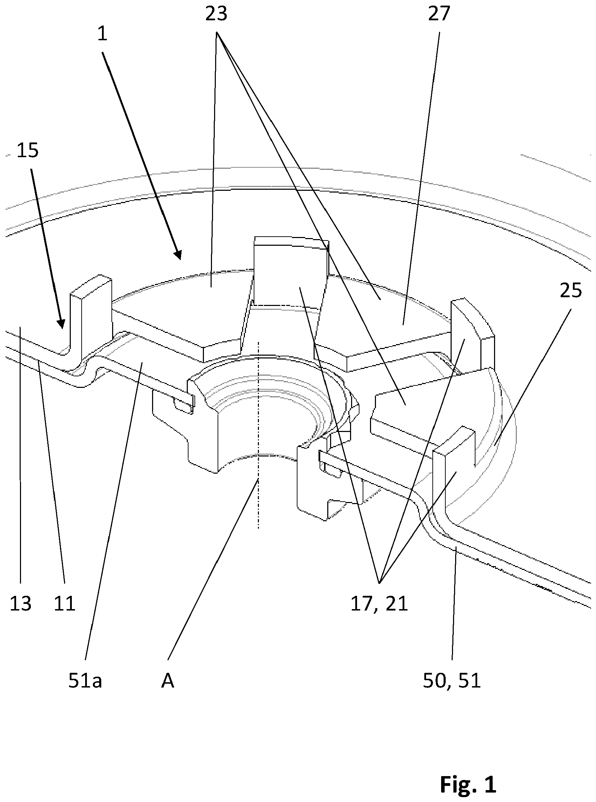

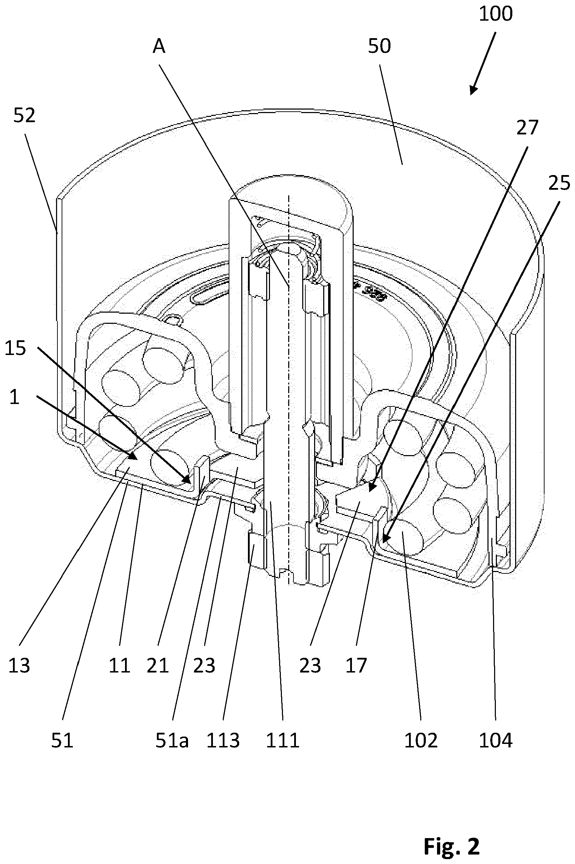

Fig. 1 shows a spring seat 1. Said spring seat 1 having a longitudinal axis A and being adapted to be placed inside a housing 50 of an actuator 100 (Fig. 2) adjacent a housing base 51 of the actuator 100.

The spring seat 1 comprises a first side 11, which faces the housing base 51. The spring seat 1 comprises a second side 13, which faces inwardly away from the housing base 51. On the second side 13 the spring seat 1 further comprises a coupling portion 15 for contacting a compression spring 102 of the spring brake actuator 100 (Fig. 2). The coupling portion 15 has an outer rim 25 extending into the direction of the longitudinal axis A for guiding the spring 102.

The spring seat 1 comprises a central embossment 27 positioned on the second side 13 and inwardly from the coupling portion 15 and essentially conforming the shape of an embossment 51a of the housing base 51.

The central embossment 27 is adapted to follow the shape of the housing base 51 of the actuator 100.

The spring seat 1 has an axial section 21 extending essentially in the direction of the longitudinal axis A.

The spring seat 1 has a central portion 23 extending essentially in the direction perpendicular to the longitudinal axis A.

The axial section 21 and central portion 23 of the central embossment 27 is dimensioned such that the central portion 23 is spaced from but essentially parallel to the central embossment 51a of the housing base 51.

The spring seat 1 comprises a plurality of guiding elements 17 for guiding the spring 102 (Fig. 2).

The guiding elements 17 extend essentially parallel to the axial section 21.

The guiding elements 17 are spaced from each other and positioned along a circle with respect to the longitudinal axis A.

The guiding elements 17 essentially extend into the direction of the longitudinal axis A.

The guiding elements 17 are produced by a stamping process and subsequent bending.

The spring seat 1 is manufactured by means of a deep-drawn process.

Fig. 2 shows a spring brake actuator 100 comprising said spring seat 1, said cylinder housing 50, a spring brake piston 104 and a compression spring 102.

The cylinder housing 50 has a circumferential portion 52 and said cylinder housing base 51. The housing base 51 has a deep drawn embossment 51a extending inwardly into the cylinder housing 50.

The spring brake piston 104 is adapted to apply a braking force by means of pressurized gas, preferably acting upon a push rod through a diaphragm (not shown).

The compression spring 102 is adapted to exert a force onto the spring brake piston 104 into the direction of its longitudinal axis A.

The spring seat 1 has a longitudinal axis A and is located inside the housing 50 of the actuator 100 mounted adjacent the housing base 51 of the actuator 100.

The spring seat 1 comprises said first side 11, which faces the housing base 51. The spring seat 1 comprises said second side 13, which faces inwardly away from the housing base 51. On the second side 13 the spring seat 1 further comprises said coupling portion 15, which is in contact with a compression spring 102 of the spring brake actuator 100.

The spring seat 1 comprises said central embossment 27 positioned on the second side 13 and inwardly from the coupling portion 15 and essentially conforming the shape of an embossment 51a of the housing base 51.

The central embossment 27 is adapted to follow the shape of the housing base 51 of the actuator 100.

A separate central boss element 113 has an internal thread for cooperating with a threat of a brake release rod 111. The central boss element 113 is attached to the deep drawn embossment 51a of the housing base 51.

The axial section 21 and central portion 23 of the central embossment 27 is dimensioned such that the central portion 23 is spaced from but essentially parallel to the central embossment 51a of the housing base 51.

The coupling portion 15 has at least in sections an outer diameter, which corresponds to the inner diameter of the lowest winding of the compression spring 102. The coupling portion 15 essentially has the shape of the circular ring extending perpendicular to the longitudinal axis A. The coupling portion 15 has an outer rim 25 extending into the direction of the longitudinal axis A for guiding the spring 102.

The spring seat 1 has said axial section 21 extending essentially in the direction of the longitudinal axis A.

The spring seat 1 has said central portion 23 extending essentially in the direction perpendicular to the longitudinal axis A.

The spring seat 1 comprises said plurality of guiding elements 17 for guiding the spring 102.

The guiding elements 17 are positioned parallel to the axial section 21.

The guiding elements 17 are spaced from each other and positioned along a circle with respect to the longitudinal axis A.

The central embossment 27 is adapted to follow the shape of the housing base 51 of the actuator 100.

The central embossment 27 is deep-drawn and comprises an outer diameter adapted to fit to an inner diameter of the compression spring 102.

The spring seat 1 is held in position within the cylinder housing 50 by the spring force of the compression spring 102.

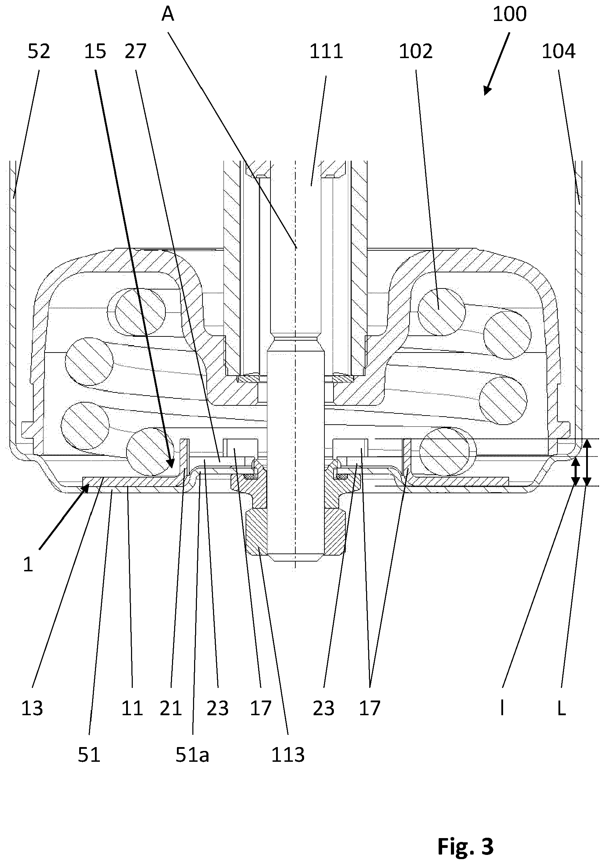

Fig. 3 shows a spring brake actuator 100 according to Fig. 2 in a sectional view.

The guiding elements 17 extending essentially into the longitudinal direction and have a length (L) which is larger than the length (I) of the central embossment 27 measured in the longitudinal axis A.

The guiding elements 17 essentially have a rectangular cross section.

### List of reference signs (part of the description)

- 1: spring seat
- 11: first side
- 13: second side
- 15: coupling portion
- 17: guiding element
- 21: axial section
- 23: central portion
- 25: outer rim
- 27: central embossment of the spring seat
- 50: brake cylinder housing
- 51: cylinder housing base
- 51a: central embossment of the housing base
- 52: circumferential portion
- 100: spring brake actuator
- 102: compression spring
- 104: spring brake piston
- 111: brake release rod
- 113: central boss element

- A: longitudinal axis
- L: length of the guiding elements
- I: length of the central embossment

## Claims

1. A spring seat (1) for use in a spring brake actuator (100), preferably parking or emergency spring brake actuator of a commercial vehicle,
said spring seat (1) having a longitudinal axis (A) and being adapted to be placed inside a housing (50) of the actuator (100) adjacent a housing base (51) of the actuator (100), the spring seat (1) comprising a first side (11), which in use faces the housing base (51), and a second side (13), which in use faces inwardly away from the housing base (51),
wherein on the second side (13) the spring seat (1) further comprising a coupling portion (15) for contacting a compression spring (102) of the spring brake actuator (100), said compression spring (102) being adapted to exert, in use, a force onto a spring brake piston (104) into the direction of its longitudinal axis (A),
wherein the spring seat (1) comprising a central embossment (27) positioned on the second side (13) and inwardly from the coupling portion (15) and essentially conforming the shape of an embossment (51a) of the housing base (51), **characterized in that** the spring seat (1) comprises a plurality of guiding elements (17) for guiding the spring (102), said guiding elements (17) extending essentially into the longitudinal direction and having a length (L) which is larger than the length (I) of the central embossment (27) measured in the longitudinal axis (A).

2. The spring seat (1) according to claim 1,
**characterized in that** the spring seat (1) having an axial section (21) extending essentially in the direction of the longitudinal axis (A).

3. The spring seat (1) according to claim 1 and/or 2,
**characterized in that** the spring seat (1) having a central portion (23) extending essentially in the direction perpendicular to the longitudinal axis (A).

4. The spring seat (1) according to one of the proceeding claims,
**characterized in that** the guiding elements (17) extend essentially parallel to the axial section (21).

5. The spring seat (1) according to one of the proceeding claims,
**characterized in that** the guiding elements (17) are spaced from each other and positioned along a circle with respect to the longitudinal axis (A).

6. The spring seat (1) according to one of the proceeding claims,
**characterized in that** the guiding elements (17) essentially have a rectangular cross section.

7. The spring seat (1) according to one of the proceeding claims,
**characterized in that** the guiding elements (17) are produced by a stamping process and subsequent bending.

8. The spring seat (1) according to at least one of the preceding claims,
**characterized in that** the spring seat (1) is manufactured by means of a deep-drawn process.

9. The spring seat (1) according to at least one of claims 1 to 7,
**characterized in that** the guiding elements (17) essentially extend into the direction of the longitudinal axis (A).

10. The spring seat (1) according to at least one of the preceding claims, **characterized in that** coupling portion (15) is essentially having the shape of a circular ring extending perpendicular to the longitudinal axis (A) and having an outer rim (25) extending into the direction of the longitudinal axis (A) for guiding the spring (102), that the central embossment (27) is adapted to follow the shape of the housing base (51) of the actuator (100), and
that the axial section (21) and central portion (23) of the central embossment (27) is dimensioned such that the central portion (23), in use, is spaced from but essentially parallel to a central embossment (51a) of the housing base (51).

11. The spring seat (1) according to any one of the preceding claims,
wherein the central embossment (27) is deep-drawn and comprises an outer diameter adapted to fit to an inner diameter of the compression spring (102).

12. A spring brake actuator (100), preferably parking or emergency spring brake actuator of a commercial vehicle, comprising:
- a cylinder housing (50) having a circumferential portion (52) and a cylinder housing base (51);
- a spring brake piston (104) for applying a braking force by means of pressurized gas, preferably acting upon a push rod through a diaphragm;
- a spring seat (1) which is located inside the housing (50) and mounted adjacent the cylinder housing base (51);
- a compression spring (102) adapted to exert, in use, a force onto the spring brake piston (104) into the direction of its longitudinal axis (A);
**characterized in that** the spring seat (1) is the spring seat (1) according to at least one of the preceding claims.

13. The spring brake actuator (100) according to claim 13,
**characterized in that** that the housing base (51) is having a deep drawn embossment (51a) extending inwardly into the cylinder housing (50),
that a separate central boss element (113) having an internal thread for cooperating with a threat of a brake release rod (111) is attached to the deep drawn embossment (51a) of the housing base (51),
and the central embossment (27) comprises an axial section (21) and a central portion (23), which is dimensioned such that the central portion (23) is spaced from but essentially parallel to the central embossment (51a) of the housing base (51).

14. The spring brake actuator (100) according to claim 12 or 13,
wherein the spring seat (1) consists of a steel alloy and wherein the spring seat (1) is at least partially, preferably fully coated with a coating selected from the list consisting of:
- Zn coating;
- composite coating;
- metallic coating;
or combinations thereof.

15. The spring brake actuator (100) according to any one of claims 13 to 15,
wherein the spring seat (1) is held in position within the cylinder housing (50) by essentially the spring force of the compression spring (102),
and/or wherein the cylinder housing base (51) is at least partially, preferably fully, coated with a coating selected from the list consisting of:
- Zn coating;
- composite coating;
- metallic coating;
- powder coating
or combinations thereof.

## Patentansprüche

1. Federaufnahme (1) zur Verwendung in einem Federbremsaktuator (100), vorzugsweise einem Feststell- oder Notfederbremsaktuator eines Nutzfahrzeugs,
wobei die Federaufnahme (1) eine Längsachse (A) aufweist und dazu ausgelegt ist, innerhalb eines Gehäuses (50) des Aktuators (100) angrenzend an einen Gehäuseboden (51) des Aktuators (100) platziert zu werden, wobei die Federaufnahme (1) eine erste Seite (11), die im Gebrauch dem Gehäuseboden (51) zugewandt ist, und eine zweite Seite (13), die im Gebrauch vom Gehäuseboden (51) weg nach innen weist, umfasst,
wobei die Federaufnahme (1) auf der zweiten Seite (13) ferner einen Kopplungsabschnitt (15) zum Kontaktieren einer Druckfeder (102) des Federbremsaktuators (100) umfasst, wobei die Druckfeder (102) dazu ausgelegt ist, im Gebrauch, eine Kraft auf einen Federbremskolben (104) in die Richtung seiner Längsachse (A) auszuüben,
wobei die Federaufnahme (1) eine zentrale Prägung (27) umfasst, die auf der zweiten Seite (13) und von dem Kopplungsabschnitt (15) nach innen positioniert ist und im Wesentlichen der Form einer Prägung (51a) des Gehäusebodens (51) entspricht, **dadurch gekennzeichnet, dass** die Federaufnahme (1) eine Vielzahl von Führungselementen (17) zum Führen der Feder (102) umfasst, wobei sich die Führungselemente (17) im Wesentlichen in die Längsrichtung erstrecken und eine Länge (L) aufweisen, die größer ist als die Länge (I) der zentralen Prägung (27), gemessen in der Längsachse (A).

2. Federaufnahme (1) nach Anspruch 1,
**dadurch gekennzeichnet, dass** die Federaufnahme (1) einen axialen Bereich (21) aufweist, der sich im Wesentlichen in die Richtung der Längsachse (A) erstreckt.

3. Federaufnahme (1) nach Anspruch 1 und/oder 2,
**dadurch gekennzeichnet, dass** die Federaufnahme (1) einen zentralen Abschnitt (23) aufweist, der sich im Wesentlichen in die Richtung senkrecht zu der Längsachse (A) erstreckt.

4. Federaufnahme (1) nach einem der vorstehenden Ansprüche,
**dadurch gekennzeichnet, dass** die Führungselemente (17) sich im Wesentlichen parallel zu dem axialen Bereich (21) erstrecken.

5. Federaufnahme (1) nach einem der vorstehenden Ansprüche,
**dadurch gekennzeichnet, dass** die Führungselemente (17) voneinander beabstandet und entlang eines Kreises in Bezug auf die Längsachse (A) positioniert sind.

6. Federaufnahme (1) nach einem der vorstehenden Ansprüche,
**dadurch gekennzeichnet, dass** die Führungselemente (17) im Wesentlichen einen rechteckigen Querschnitt aufweisen.

7. Federaufnahme (1) nach einem der vorstehenden Ansprüche,
**dadurch gekennzeichnet, dass** die Führungselemente (17) durch einen Stanzprozess und anschließendes Biegen produziert sind.

8. Federaufnahme (1) nach mindestens einem der vorstehenden Ansprüche,
**dadurch gekennzeichnet, dass** die Federaufnahme (1) mittels eines Tiefziehprozesses hergestellt ist.

9. Federaufnahme (1) nach mindestens einem der Ansprüche 1 bis 7,
**dadurch gekennzeichnet, dass** die Führungselemente (17) sich im Wesentlichen in die Richtung der Längsachse (A) erstrecken.

10. Federaufnahme (1) nach mindestens einem der vorstehenden Ansprüche,
**dadurch gekennzeichnet, dass** der Kopplungsabschnitt (15) im Wesentlichen die Form eines kreisförmigen Rings aufweist, der sich senkrecht zur Längsachse (A) erstreckt und einen Außenrand (25) aufweist, der sich in die Richtung der Längsachse (A) zum Führen der Feder (102) erstreckt, dass die zentrale Prägung (27) dazu ausgelegt ist, der Form des Gehäusebodens (51) des Aktuators (100) zu folgen, und
dass der axiale Bereich (21) und der zentrale Abschnitt (23) der zentralen Prägung (27) so bemessen ist, dass der zentrale Abschnitt (23), im Gebrauch, von einer zentralen Prägung (51a) des Gehäusebodens (51) beabstandet, aber im Wesentlichen parallel dazu ist.

11. Federaufnahme (1) nach einem der vorstehenden Ansprüche,
wobei die zentrale Prägung (27) tiefgezogen ist und einen Außendurchmesser umfasst, der an einen Innendurchmesser der Druckfeder (102) angepasst ist.

12. Federbremsaktuator (100), vorzugsweise der Feststell- oder Notfederbremsaktuator eines Nutzfahrzeugs, der umfasst:
- ein Zylindergehäuse (50), das einen Umfangsabschnitt (52) und einem Zylindergehäuseboden (51) aufweist;
- einen Federbremskolben (104) zum Aufwenden einer Bremskraft mittels unter Druck stehendem Gas, das vorzugsweise über eine Membran auf eine Schubstange wirkt;
- eine Federaufnahme (1), die sich innerhalb des Gehäuses (50) befindet und angrenzend an den Zylindergehäuseboden (51) angebracht ist;
- eine Druckfeder (102), die dazu ausgelegt ist, im Gebrauch, eine Kraft auf den Federbremskolben (104) in die Richtung seiner Längsachse (A) auszuüben;
**dadurch gekennzeichnet, dass** die Federaufnahme (1) die Federaufnahme (1) nach mindestens einem der vorstehenden Ansprüche ist.

13. Federbremsaktuator (100) nach Anspruch 13,
**dadurch gekennzeichnet, dass** der Gehäuseboden (51) eine tiefgezogene Prägung (51a) aufweist, die sich nach innen in das Zylindergehäuse (50) erstreckt,
dass ein separates zentrales Nabenelement (113), das ein Innengewinde zum Zusammenwirken mit einem Gewinde einer Bremslösestange (111) aufweist, an der tiefgezogenen Prägung (51a) des Gehäusebodens (51) angebracht ist,
und die zentrale Prägung (27) einen axialen Bereich (21) und einen zentralen Abschnitt (23) umfasst, der so bemessen ist, dass der zentrale Abschnitt (23) von der zentralen Prägung (51a) des Gehäusebodens (51) beabstandet, aber im Wesentlichen parallel dazu ist.

14. Federbremsaktuator (100) nach Anspruch 12 oder 13,
wobei die Federaufnahme (1) aus einer Stahllegierung besteht und wobei die Federaufnahme (1) mindestens teilweise, vorzugsweise vollständig, mit einer Beschichtung beschichtet ist, die aus der Liste ausgewählt ist, bestehend aus:
- einer Zn-Beschichtung;
- einer Verbundbeschichtung;
- einer metallischen Beschichtung;
oder Kombinationen davon.

15. Federbremsaktuator (100) nach einem der Ansprüche 13 bis 15,
wobei die Federaufnahme (1) durch im Wesentlichen eine Federkraft der Druckfeder (102) innerhalb des Zylindergehäuses (50) in Position gehalten wird,
und/oder wobei der Zylindergehäuseboden (51) mindestens teilweise, vorzugsweise vollständig, mit einer Beschichtung beschichtet ist, die aus der Liste ausgewählt ist, bestehend aus:
- einer Zn-Beschichtung;
- einer Verbundbeschichtung;
- einer metallischen Beschichtung;
- einer Pulverbeschichtung
oder Kombinationen davon.

## Revendications

1. Siège de ressort (1) destiné à être utilisé dans un actionneur de frein à ressort (100), de préférence un actionneur de frein à ressort de stationnement ou d'urgence d'un véhicule utilitaire,
ledit siège de ressort (1) présentant un axe longitudinal (A) et étant conçu pour être placé à l'intérieur d'un logement (50) de l'actionneur (100) adjacent à une base de logement (51) de l'actionneur (100), le siège de ressort (1) comprenant un premier côté (11) qui, lors de l'utilisation, fait face à la base de logement (51), et un second côté (13) qui, lors de l'utilisation, fait face vers l'intérieur à distance de la base de logement (51),
dans lequel, sur le second côté (13), le siège de ressort (1) comprend en outre une partie d'accouplement (15) destinée à venir en contact avec un ressort de compression (102) de l'actionneur de frein à ressort (100), ledit ressort de compression (102) étant conçu pour exercer, lors de l'utilisation, une force sur un piston de frein à ressort (104) dans la direction de son axe longitudinal (A),
dans lequel le siège de ressort (1) comprend un bossage central (27) positionné sur le second côté (13) et vers l'intérieur depuis la partie d'accouplement (15) et épousant sensiblement la forme d'un bossage (51a) de la base de logement (51), **caractérisé en ce que** le siège de ressort (1) comprend une pluralité d'éléments de guidage (17) destinés à guider le ressort (102), lesdits éléments de guidage (17) s'étendant sensiblement dans la direction longitudinale et présentant une longueur (L) qui est supérieure à la longueur (L) du bossage central (27) mesuré dans l'axe longitudinal (A).

2. Siège de ressort (1) selon la revendication 1,
**caractérisé en ce que** le siège de ressort (1) présente une section axiale (21) s'étendant sensiblement dans la direction de l'axe longitudinal (A).

3. Siège de ressort (1) selon les revendications 1 et/ou 2,
**caractérisé en ce que** le siège de ressort (1) présentant une partie centrale (23) s'étendant sensiblement dans la direction perpendiculaire à l'axe longitudinal (A).

4. Siège de ressort (1) selon l'une quelconque des revendications précédentes,
**caractérisé en ce que** les éléments de guidage (17) s'étendent sensiblement parallèlement à la section axiale (21).

5. Siège de ressort (1) selon l'une quelconque des revendications précédentes,
**caractérisé en ce que** les éléments de guidage (17) sont espacés l'un de l'autre et positionnés le long d'un cercle par rapport à l'axe longitudinal (A).

6. Siège de ressort (1) selon l'une quelconque des revendications précédentes,
**caractérisé en ce que** les éléments de guidage (17) présentent sensiblement une section transversale rectangulaire.

7. Siège de ressort (1) selon l'une quelconque des revendications précédentes,
**caractérisé en ce que** les éléments de guidage (17) sont réalisés par un processus d'estampage suivi d'un pliage.

8. Siège de ressort (1) selon au moins l'une des revendications précédentes,
**caractérisé en ce que** le siège de ressort (1) est fabriqué au moyen d'un procédé d'emboutissage.

9. Siège de ressort (1) selon au moins l'une des revendications 1 à 7,
**caractérisé en ce que** les éléments de guidage (17) s'étendent sensiblement dans la direction de l'axe longitudinal (A).

10. Siège de ressort (1) selon au moins l'une des revendications précédentes,
**caractérisé en ce que** la partie d'accouplement (15) présente sensiblement la forme d'un anneau circulaire s'étendant perpendiculairement à l'axe longitudinal (A) et présente un rebord externe (25) s'étendant dans la direction de l'axe longitudinal (A) pour guider le ressort (102), **en ce que** le bossage central (27) est conçu pour suivre la forme de la base de logement (51) de l'actionneur (100), et
**en ce que** la section axiale (21) et la partie centrale (23) du bossage central (27) sont dimensionnées de telle sorte que la partie centrale (23), lors de l'utilisation, est espacée de, mais sensiblement parallèle à un bossage central (51a) de la base de logement (51).

11. Siège de ressort (1) selon l'une quelconque des revendications précédentes,
dans lequel le bossage central (27) est embouti et comprend un diamètre externe conçu pour s'ajuster à un diamètre interne du ressort de compression (102).

12. Actionneur de frein à ressort (100), de préférence actionneur de frein à ressort de stationnement ou d'urgence d'un véhicule utilitaire, comprenant :
- un logement de cylindre (50) présentant une partie circonférentielle (52) et une base de logement de cylindre (51) ;
- un piston de frein à ressort (104) destiné à appliquer une force de freinage au moyen de gaz sous pression, agissant de préférence sur une tige de poussée à travers une membrane ;
- un siège de ressort (1) qui est situé à l'intérieur du logement (50) et monté adjacent à la base de logement de cylindre (51) ;
- un ressort de compression (102) conçu pour exercer, lors de l'utilisation, une force sur le piston de frein à ressort (104) dans la direction de son axe longitudinal (A) ;
**caractérisé en ce que** le siège de ressort (1) est le siège de ressort (1) selon au moins l'une des revendications précédentes.

13. Actionneur de frein à ressort (100) selon la revendication 13,
**caractérisé en ce que** la base de logement (51) présente un bossage embouti (51a) s'étendant vers l'intérieur dans le logement de cylindre (50),
**en ce qu'**un élément de bossage central séparé (113), présentant un filetage interne destiné à coopérer avec un filetage d'une tige de libération de frein (111), est fixé au bossage embouti (51a) de la base de logement (51),
et le bossage central (27) comprend une section axiale (21) et une partie centrale (23) qui est dimensionnée de telle sorte que la partie centrale (23) est espacée de, mais sensiblement parallèle au bossage central (51a) de la base de logement (51).

14. Actionneur de frein à ressort (100) selon la revendication 12 ou 13,
dans lequel le siège de ressort (1) est constitué d'un alliage d'acier et dans lequel le siège de ressort (1) est au moins partiellement, de préférence entièrement revêtu d'un revêtement choisi dans la liste constituée par :
- un revêtement de Zn ;
- un revêtement composite ;
- un revêtement métallique ;
ou leurs combinaisons.

15. Actionneur de frein à ressort (100) selon l'une quelconque des revendications 13 à 15,
dans lequel le siège de ressort (1) est maintenu en position à l'intérieur du logement de cylindre (50) essentiellement par la force de ressort du ressort de compression (102),
et/ou dans lequel la base de logement de cylindre (51) est au moins partiellement, de préférence entièrement, revêtue d'un revêtement choisi dans la liste constituée par :
- un revêtement de Zn ;
- un revêtement composite ;
- un revêtement métallique ;
- revêtement en poudre
ou leurs combinaisons.
